(19) Europäisches Patentamt
European Patent Office
Office européen des brevets

(11) **EP 1 856 486 B1**

(12) **FASCICULE DE BREVET EUROPEEN**

(45) Date de publication et mention
de la délivrance du brevet:
**12.10.2011 Bulletin 2011/41**

(51) Int Cl.:
***G01D 5/353*** *(2006.01)*   ***G01L 1/24*** *(2006.01)*

(21) Numéro de dépôt: **06707165.4**

(22) Date de dépôt: **22.02.2006**

(86) Numéro de dépôt international:
**PCT/EP2006/001600**

(87) Numéro de publication internationale:
**WO 2006/089729 (31.08.2006 Gazette 2006/35)**

(54) **CAPTEUR DE CHOCS A FIBRE OPTIQUE MULTIMODE FONCTIONNANT SUR LE PRINCIPE DU COUPLAGE ENTRE MODES GUIDES PAR LA FIBRE**

FASEROPTISCHER MEHRFACHMODUS-STOSSSENSOR, DER GEMÄSS DEM PRINZIP DER KOPPLUNG ZWISCHEN FASERGEFÜHRTEN MODENFÜHRUNGEN ARBEITET

MULTIMODE OPTICAL FIBER IMPACT SENSOR OPERATING IN ACCORDANCE WITH THE PRINCIPLE OF COUPLING BETWEEN FIBER-GUIDED MODES GUIDED

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.02.2005 EP 05003999**
**30.06.2005 EP 05014133**

(43) Date de publication de la demande:
**21.11.2007 Bulletin 2007/47**

(73) Titulaire: **FIBERLAKE S.A.**
**2449 Luxembourg (LU)**

(72) Inventeur: **BOUAMRA, Mohamed**
**F-74000 Annecy (FR)**

(74) Mandataire: **Couillard, Yann Luc Raymond et al**
**ICB**
**Ingénieurs Conseils en Brevets SA**
**Faubourg de l'Hôpital 3**
**2001 Neuchâtel (CH)**

(56) Documents cités:
**GB-A- 2 125 572   US-A- 4 443 700**
**US-A- 6 144 790**

• **LAGAKOS N ET AL: "FIBER OPTIC MICROBEND SENSOR" ISA TRANSACTIONS, INSTRUMENT SOCIETY OF AMERICA. PITTSBURGH, US, vol. 27, no. 1, janvier 1988 (1988-01), pages 19-24, XP000034933 ISSN: 0019-0578**

EP 1 856 486 B1

**Description**

La présente invention concerne un capteur de chocs à fibre optique multimode fonctionnant sur le principe du couplage entre modes guidés par la fibre. La présente invention concerne plus particulièrement un dispositif de sécurité comprenant un tel capteur qui peut être associé à tous types de panneaux mobiles destinés à obturer une ouverture. Un tel dispositif vise à empêcher qu'un usager ne se fasse pincer lors du mouvement de fermeture du panneau mobile auquel il est associé. L'invention s'applique indifféremment à des panneaux coulissants entraînés soit par un moteur électrique, soit par des moyens pneumatiques ou hydrauliques. Elle concerne en particulier les dispositifs de lève-vitre électriques et de toits ouvrants dans les véhicules automobiles. Elle concerne également les portes coulissantes utilisées dans les véhicules de transport en commun telles que les portières d'autobus, de train ou de métro qui sont entraînées par des moyens hydrauliques ou pneumatiques. L'invention s'applique également aux portes pivotantes, aux portails d'entrée coulissants et aux barrières des immeubles et parkings. Un tel dispositif est par exemple décrit dans le document FR2615284.

Le dispositif de sécurité selon l'invention comprend pour l'essentiel un capteur de chocs à fibre optique disposé soit le long de l'encadrement de l'ouverture à obturer, soit sur la tranche du panneau mobile lui-même. Le capteur de chocs selon l'invention repose sur le principe du couplage entre modes guidés dans une fibre optique multimode. Lorsqu'un corps étranger s'oppose à la fermeture normale du panneau, le signal provenant du capteur est exploité pour arrêter et/ou inverser le sens de marche du panneau.

Une fibre optique multimode peut comporter un nombre important de modes guidés. Dans le cas d'une fibre à saut d'indice, ce nombre N de modes dépend de la dimension du coeur de la fibre, de son ouverture numérique et de la longueur d'onde du signal optique qui s'y propage. Il est déterminé par la relation suivante :

$$N_m = \frac{2\pi^2 R_c^2 . ON^2}{\lambda^2}$$

où ON est l'ouverture numérique de la fibre,

$R_c$ est le rayon de coeur de la fibre, et

$\lambda$ est la longueur d'onde centrale du signal optique injecté dans la fibre.

Lorsque la fibre optique multimode est soumise à des perturbations, les modes, qu'ils soient guidés à l'intérieur du coeur de la fibre optique ou rayonnés à travers la gaine optique, échangent de l'énergie entre eux. C'est ce que l'on appelle le phénomène de couplage entre modes. Les perturbations qui génèrent ces couplages peuvent être de différentes sortes. Elles peuvent être de nature intrinsèque, c'est-à-dire liées à la fibre proprement dite, étant donné que celle-ci présente toujours des défauts microscopiques tels que des impuretés et des inhomogénéités diverses qui apparaissent lors de son processus de fabrication. Les perturbations peuvent être également de nature extrinsèque, c'est-à-dire engendrées par des variations de paramètres environnementaux tels que des paramètres thermiques, des paramètres acoustiques ou encore des paramètres liés à des variations de pression ou des déformations géométriques. Les variations des conditions d'injection des modes dans la fibre optique (distance, alignement axial et angulaire entre la source optique et la fibre) contribuent également à modifier fortement les couplages entre modes.

Selon que la source optique est cohérente (cas d'une diode laser) ou faiblement cohérente (cas d'une diode électroluminescente ou "led"), l'aspect du signal en sortie de la fibre n'est pas le même. Nous allons successivement examiner les deux cas.

Lorsque la lumière rouge issue d'un laser hélium-néon (illumination cohérente) est injectée à l'une des extrémités de la fibre, le signal optique émis en sortie à l'autre extrémité de la fibre présente un aspect granulaire. Cet aspect granulaire, également connu sous sa dénomination anglo-saxonne "speckle", résulte du phénomène d'interférences multiples entre les différents modes. On observe que l'intensité et la répartition des grains changent continuellement de manière chaotique, et augmentent particulièrement lorsqu'on soumet la fibre à une perturbation extrinsèque. Ces modifications résultent des couplages cohérents entre les modes. L'observation ou la mesure d'une fraction de l'intensité lumineuse relativement à la surface de l'un au moins de ces grains permet de caractériser les couplages entre certains modes particuliers. On notera que dans ce cas, bien que n'étant que faiblement reproductible du fait de son caractère chaotique, la réponse de la fibre à une perturbation extrinsèque est extrêmement sensible.

Dans le cas d'une illumination incohérente, les modes deviennent sensiblement incohérents les uns par rapport aux autres. Les couplages ne produisent ainsi que très peu d'interférences et peuvent être considérés comme une somme d'intensités lumineuses pondérée par les coefficients de couplages propres à chaque mode. De ce fait, le faisceau lumineux en sortie de la fibre ne présente plus de caractère granulaire (speckle) et paraît beaucoup plus uniforme. On parle alors de continuum modal. La mesure d'une partie de ce signal permet également de caractériser les couplages entre modes. La réponse est moins sensible que dans le cas précédent mais, du fait même de la perte du caractère chaotique propre à l'illumination cohérente, elle présente également une meilleure reproductibilité.

Dans le cas général, le signal lumineux se propageant dans le sens z'z suivant l'axe longitudinal de la fibre est décrit par les composantes transversales du champ électromagnétique associé :

$$E_t(x, y, z) = \sum_j b_j(z)\hat{e}_{tj}(x, y, \beta_j(z))$$

$$H_t(x, y, z) = \sum_j b_j(z)\hat{h}_{tj}(x, y, \beta_j(z))$$

où $\beta_j$ (z) est la constante de propagation suivant l'axe longitudinal z de la fibre optique, l'indice t indique qu'il s'agit de composantes transversales et le symbole ^ symbolise le caractère orthogonal des champs. On montre que le terme bj (z) qui décrit l'amplitude et la phase du mode j en un point quelconque de l'axe z vérifie la relation de couplage

$$\frac{db_j}{dz} - i\beta_j b_j = \sum_l C_{jl} b_l$$

Les termes $C_{jl}$ sont les coefficients de couplage définis par les relations suivantes :

$$C_{jl} = \frac{1}{4} \int_{A\infty} \left\{ \hat{h}_j \times \frac{\partial \hat{e}_l}{\partial z} - \hat{e}_j \times \frac{\partial \hat{h}_l}{\partial z} \right\}.\hat{z}dA$$

$$j \neq l$$

$$C_{jj} = 0$$

où $A_\infty$ est la section transversale de la fibre et z le vecteur unitaire parallèle à l'axe longitudinal de la fibre. En utilisant les propriétés de symétrie du champ électromagnétique (changement de "l" en "-l" et de "j" en "-j"), on montre que les coefficients de couplage peuvent prendre la forme suivante :

$$C_{jl} = \frac{4}{k} \left( \frac{\varepsilon_0}{\mu_0} \right)^{1/2} \frac{1}{\beta_j - \beta_l} \int_{A\infty} \hat{e}_j^* . \hat{e}_l \frac{\partial n^2}{\partial z} dA$$

$$j \neq l$$
$$C_{jj} = 0$$

Le symbole (*) représente la quantité complexe conjuguée. On observe ainsi que toute perturbation, affectant localement en z l'indice de réfraction n, induit un couplage du mode "l" vers le mode "j" suivant une proportion définie par le coefficient $C_{jl}$. L'énergie lumineuse totale se propageant dans la fibre est alors donnée par la relation suivante :

$$P_{out}(z) = \sum_j \left| b_j(z) \right|^2$$

On s'intéresse maintenant aux couplages résultant de perturbations mécaniques périodiques. L'équation de la constante de propagation d'un mode définie par ses deux paramètres entiers $\mu$ et $\nu$, décrivant respectivement la dépendance radiale et azimutale du champ électromagnétique (E.M) qui lui est associé, s'écrit :

$$\beta_{\nu,\mu} = kn_c \left[ 1 - 2\Delta \left( \frac{\alpha+2}{\alpha} \frac{(2\mu+\nu)}{a^2 k^2 n_c^2 \Delta} \right)^{\alpha/\alpha+2} \right]^{1/2}$$

Les conditions aux limites imposées aux modes guidés doivent satisfaire la relation :

$$0 \leq (2\mu+\nu)^2 \leq \Delta(akn_c)^2 \frac{\alpha}{\alpha+2}$$

La présence d'un défaut présentant une périodicité A telle que :

$$\Delta\beta = \frac{2\pi}{\Lambda}$$

peut coupler deux modes ou groupes de modes satisfaisant à la règle de sélection liée au couplage avec le plus proche voisin ( couplage entre les modes $(\mu,\nu)$ et $(\mu,\nu+1)$).
Pour une fibre à saut d'indice (le coefficient $\alpha$ tend vers l'infini), l'espacement entre les modes voisins est donné par :

$$\Delta\beta_{(\mu,\nu)(\mu,\nu+1)} = \frac{1}{(akn_c)^2}(1+2(2\mu+\nu))$$

D'après les bornes des modes guidés :

$$\frac{1}{a^2 kn_c} \leq \Delta\beta \leq \frac{1}{a^2 kn_c} + \frac{2\sqrt{\Delta}}{a}$$

Ainsi, si un défaut mécanique périodique de fréquence $2\pi/\Lambda$ est appliqué à une fibre à saut d'indice, nous aurons :

- pas de couplage si :

$$\frac{2\pi}{\Lambda} \leq \frac{1}{a^2 kn_c} \quad (1)$$

- un couplage entre modes guidés si :

$$\frac{1}{a^2 kn_c} \leq \frac{2\pi}{\Lambda} \leq \frac{1}{a^2 kn_c} + \frac{2\sqrt{\Delta}}{a} \quad (2)$$

- un couplage entre modes guidés et modes rayonnants si :

$$\frac{2\pi}{\Lambda} \geq \frac{1}{a^2 kn_c} + \frac{2\sqrt{\Delta}}{a} \quad (3)$$

où a est le rayon de coeur de la fibre optique,
k = $2\pi/\lambda$ avec $\lambda$ longueur d'onde d'émission de la source,
$n_c$ indice de réfraction optique du coeur de la fibre optique, et
$\Delta = (n_c - n_{cl})/n_c$ est la différence relative des indices avec $n_{cl}$ indice de réfraction de
la gaine de la fibre optique.

Ainsi, si on soumet une fibre à des courbures périodiques de période $\Lambda$ et de faible amplitude, on peut favoriser les couplages entre des groupes de modes particuliers et rendre ainsi la fibre plus sensible à de faibles perturbations et, en particulier, dans le cas qui nous intéresse, aux efforts qui s'exercent sur elles.

On s'intéresse maintenant aux conditions de sensibilisation d'une fibre pour la détection d'une perturbation en utilisant les couplages entre modes. Du fait des couplages entre modes, en un point quelconque de l'axe longitudinal de la fibre, l'intensité de chaque mode apparaît comme la superposition de l'intensité résiduelle propre du mode calculée en ce point et de l'ensemble des contributions par couplages en provenance des autres modes. Ces contributions sont modélisées par des coefficients de pondération appelés coefficients de couplage qui peuvent être de type complexe si la lumière est cohérente ou réels dans le cas contraire.

Suivant la relation ci-dessus, l'intensité du signal lumineux en sortie d'une fibre optique multimode apparaît comme la somme des contributions de chaque mode. On peut constater que, dans la mesure où les couplages avec les modes rayonnants sont négligeables, la détection en sortie de la fibre de l'ensemble des modes guidés donne une valeur sensiblement constante, même en présence d'une perturbation. Il est en effet aisé de voir que la perte d'énergie d'un mode s'effectue au bénéfice des autres modes et que, globalement, l'énergie lumineuse reste confinée dans la fibre optique. Ainsi, la détection de la totalité des modes guidés en sortie d'une fibre optique multimode ne permet pas de matérialiser les couplages entre ces modes induits par une perturbation donnée. La fibre optique est, dans ces conditions, très peu sensible aux perturbations extérieures et, en particulier, aux faibles efforts que l'on cherche à détecter.

Le phénomène de couplage ne devient appréciable que si l'on procède en sortie de la fibre servant de partie sensible à une sélection ou filtrage de mode qui permet de mesurer les modifications d'intensité d'un seul mode ou d'un seul groupe de modes ou d'un nombre limité de groupes de modes. La sensibilité est d'autant plus grande que le nombre de modes détectés est petit et est optimale lorsqu'un seul mode est détecté.

Au regard de ce qui précède, on comprend également qu'en aval du dispositif de sélection modale, la fibre optique peut reprendre les mêmes caractéristiques optogéométriques que la fibre optique située en amont du sélecteur de modes tout en restant quasiment insensible aux perturbations extérieures. Par conséquent, seule la partie de fibre optique située en amont du sélecteur de modes est sensible aux phénomènes que l'on cherche à détecter.

Notons également que du fait des perturbations intrinsèques et extrinsèques, les modes extraits de la fibre au niveau d'un sélecteur de modes ont tendance à réapparaître par couplages en aval de ce sélecteur de modes. Il n'est donc pas possible de conserver une distribution filtrée de modes sur des longueurs de fibres plus ou moins importantes après le dispositif de filtrage modal.

Parmi les méthodes de filtrage de modes les plus connues dans l'art antérieur, on peut citer les trois possibilités suivantes :

- disposer un photodétecteur de surface active suffisamment faible à une distance telle de l'extrémité de sortie de la fibre optique que seule une proportion donnée du signal émis par cette fibre soit détectée par le photodétecteur. En pratique, le photodétecteur doit être disposé à plusieurs centimètres de la fibre optique, ce qui rend un tel détecteur encombrant;
- disposer un diaphragme de dimensions suffisamment faibles entre la sortie de la fibre optique et le photodétecteur. Une telle solution est coûteuse, nécessite une pièce supplémentaire et est encombrante car le diaphragme doit être placé assez loin de la sortie de la fibre optique;
- assembler, au moyen d'un procédé de connexion connu, deux fibres optiques, la seconde ayant un diamètre de coeur sensiblement inférieur à celui de la première. Dans un cas extrême, on peut envisager d'assembler une fibre multimode avec une fibre monomode.

Cette dernière possibilité est illustrée par le brevet américain US 6,144,790 au nom de Bledin. Ce document concerne un dispositif de détection d'impacts reposant sur le principe du couplage entre modes guidés dans une fibre optique. Un tel dispositif semble difficile à utiliser pour la fabrication en série, notamment en raison de son prix de revient. Il utilise, en effet, une source de lumière cohérente de type laser qui est coûteuse. Il est par ailleurs difficile de relier une fibre optique monomode à une fibre optique multimode. Il faut pour cela enlever les gaines de protection des fibres, couper soigneusement les extrémités des fibres par clivage, puis abouter les extrémités des fibres au moyen d'un dispositif de soudage à arc. De telles opérations, réalisables en laboratoire, sont plus difficiles à mettre en oeuvre à l'échelon industriel. Enfin, un tel dispositif qui utilise une lumière cohérente se révèle trop sensible. Effectivement, quand on illumine une fibre optique au moyen d'une source lumineuse cohérente, les couplages entre modes cohérents sont extrêmement sensibles à toutes les variations des paramètres extérieurs. En particulier, le capteur est sensible non seulement aux chocs directement appliqués sur la fibre optique, mais également aux chocs consécutifs à la fermeture de la portière ou du panneau coulissant lorsqu'il arrive en fin de course, aux vibrations environnantes et autres.

La présente invention a pour but de remédier aux inconvénients susmentionnés ainsi qu'à d'autres encore en procurant un dispositif de détection de chocs reposant sur le principe du couplage entre modes guidés dans une fibre optique qui soit notamment peu coûteux et utilisable à une échelle industrielle.

A cet effet, la présente invention concerne un capteur de chocs à fibre optique multimode fonctionnant sur le principe du couplage entre les modes guidés par la fibre optique, ce capteur comprenant une source lumineuse disposée à une première extrémité de la fibre pour injecter un faisceau lumineux dans cette dernière, et un photodétecteur disposé à une seconde extrémité de la fibre pour recevoir la lumière transmise par la fibre, ce capteur étant caractérisé en ce que la fibre optique présente en un endroit de sa longueur un rétrécissement de diamètre suffisant pour extraire une partie des modes guidés dans la fibre optique.

Dans une fibre optique multimode, un grand nombre de modes se propagent et échangent de l'énergie entre eux sous l'effet de perturbations intrinsèques (défauts dans la fibre) ou sous l'effet de perturbations extrinsèques (fluctuations des paramètres environnementaux tels que température ou pression). Lorsqu'on injecte de la lumière dans une fibre optique multimode et que l'on détecte la totalité des modes en sortie de cette fibre, il n'est pas possible de distinguer les couplages entre ces modes car l'énergie perdue par un mode est gagnée par un autre mode. Il est donc nécessaire de procéder à une détection sur un nombre limité de modes seulement, ce nombre devant être d'autant plus petit que le degré de sensibilité recherché est grand. La réduction locale du diamètre de la fibre optique agit donc vis-à-vis des modes qui se propagent dans la fibre comme un filtre empêchant par un phénomène de réfraction un certain nombre de ces modes de se propager au-delà du rétrécissement. Dans un cas extrême, il est possible de ne plus observer qu'un seul mode en aval du rétrécissement. On obtient alors une sensibilité maximale.

Une fibre optique non déformée comporte un nombre total N de modes guidés. A l'endroit où l'on procède au rétrécissement de la fibre, l'interface entre le coeur et la gaine de la fibre se rapproche de l'axe longitudinal de la fibre selon un angle donné. En fonction de la valeur de cet angle et du rapport entre le diamètre initial de la fibre et son diamètre final à l'endroit où la fibre est la plus mince, on peut influer sur le nombre de modes qui seront réfractés. Ainsi, les modes d'ordre 1 à L peuvent continuer à se propager dans la fibre, tandis que les modes d'ordre supérieur L+1 jusqu'à N seront réfractés (L et N sont des nombres entiers naturels). Or, sous l'effet d'une perturbation, les modes d'ordre supérieur L+1, N sont susceptibles d'échanger par couplage de l'énergie avec les modes d'ordre inférieur 1, L. Comme seuls les modes d'ordre inférieur sont transmis par la fibre optique au niveau de son rétrécissement, on détectera donc, en aval dudit rétrécissement, une variation d'énergie lumineuse traduisant une variation d'un paramètre environnemental extrinsèque.

Un autre avantage de la présente invention réside dans le fait que l'on peut employer tout type de fibre optique multimode. Une première famille de fibres optiques est constituée par les fibres en silice. Ces fibres sont toutefois d'une mise en oeuvre délicate. Il faut d'abord les dénuder, puis les couper soigneusement par clivage avant de les coller dans des connecteurs qui permettront de les relier à la source optique et au photodétecteur et enfin les polir. D'autre part, le rétrécissement de diamètre d'une fibre optique en silice doit s'effectuer au moyen d'un dispositif de chauffage à arc à des températures relativement élevées.

C'est pourquoi, selon un mode préféré de réalisation de la présente invention, on utilisera des fibres optiques en plastique. De telles fibres sont plus faciles à couper que des fibres en silice (il suffit de les couper au moyen d'une lame préalablement chauffée), plus faciles à munir d'un connecteur et l'opération de rétrécissement local est rendue très aisée (chauffage local de la fibre à basse température (de 70 à 80°C) puis étirage). Un autre avantage déterminant des fibres optiques en plastique est qu'elles sont largement employées notamment dans le secteur automobile, ce qui permet de bénéficier du facteur d'échelle en termes de coût. Enfin, les fibres optiques en plastique sont de diamètre relativement grand et présente donc un bon rendement à l'injection, ce qui permet d'éviter d'avoir à recourir à des sources lumineuses puissantes et coûteuses.

D'autres caractéristiques et avantages de la présente invention ressortiront plus clairement de la description détaillée qui suit d'un mode de réalisation du capteur de chocs à fibre optique selon l'invention, cet exemple étant donné à titre purement illustratif et non limitatif seulement, en liaison avec les dessins annexés sur lesquels :

- la figure 1 est une représentation schématique de principe du capteur de chocs selon l'invention;
- la figure 2 est une vue en coupe d'une fibre optique multimode au niveau de son rétrécissement local;
- la figure 3 est une représentation schématique de la fonction de transfert du filtre modal;
- la figure 4A illustre le profil d'indice d'une fibre optique à saut d'indice;
- la figure 4B est une vue en coupe longitudinale d'une fibre optique à saut d'indice sur laquelle est représentée la trajectoire d'un mode optique;
- la figure 5 est une vue en coupe d'une portion de fibre optique courbée;
- la figure 6 est une courbe représentant la distribution de l'énergie à la sortie d'une fibre optique courbée périodiquement;
- la figure 7 est une représentation schématique d'un mode d'exécution simplifié du capteur de chocs selon l'invention;
- la figure 8 est une représentation schématique d'un mode d'exécution perfectionné du capteur de chocs selon l'invention;
- la figure 9 est une représentation schématique d'une première variante de réalisation du capteur de chocs selon l'invention;
- la figure 10 est une représentation schématique d'un seconde variante de réalisation du capteur selon l'invention,
- la figure 11 est une représentation schématique d'un circuit électronique servant à la détection d'un obstacle par impact et à la génération d'un signal d'alarme.

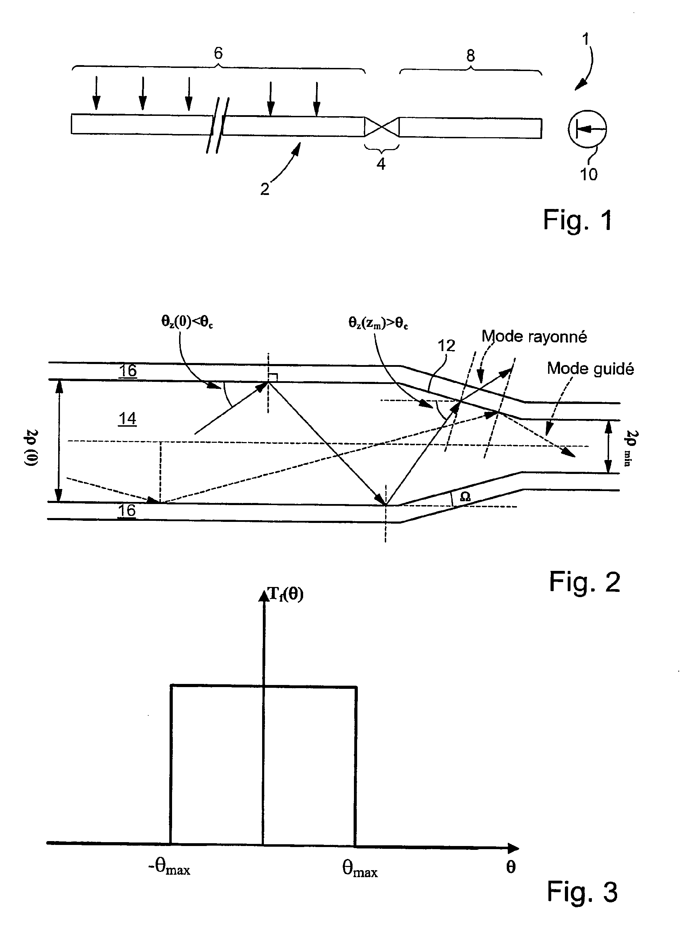

Conformément à la présente invention, la technique de filtrage utilisée pour détecter les couplages entre modes est la suivante. Désigné dans son ensemble par la référence numérique générale 1, le capteur de chocs représenté à la figure 1 comprend une fibre optique 2 qui peut être une fibre toute silice mais qui sera préférentiellement une fibre plastique. En un endroit de la longueur de la fibre optique 2, on réalise par toute méthode appropriée un rétrécissement local 4 à la fois des diamètres de coeur et de gaine de ladite fibre optique 2. On dispose ainsi d'une première partie 6 de fibre optique sensible aux couplages entre modes induits par des perturbations extérieures, tandis que la seconde partie 8 de fibre optique, séparée de la première par le rétrécissement local 4, est insensible aux perturbations et sert à la transmission de l'information jusqu'à un photodétecteur 10. En effet, en vertu des conditions de sensibilisation décrites précédemment, les perturbations appliquées sur cette seconde partie de la fibre optique ne sont pas décelables puisque la détection des modes est globale. Cette configuration présente donc l'avantage de pouvoir disposer d'une longueur de fibre suffisante, très peu sensible aux perturbations environnantes, pour amener l'information jusqu'à une électronique de traitement.

En effet, le rétrécissement local 4 de la fibre, lorsqu'il est pratiqué sur une longueur suffisamment courte pour passer d'un rayon de coeur $\rho(0)$ à un autre rayon $\rho_{min}$ inférieur à $\rho(0)$, permet d'éliminer tous les modes guidés supérieurs à un certain ordre et de conserver uniquement les modes d'ordre inférieur. Comme on peut le voir à la figure 2, du fait du rétrécissement, la surface 12 de l'interface entre le coeur 14 et la gaine 16 suit des lignes qui ne sont plus parallèles à l'axe longitudinal z-z' de la fibre 2. Ceci a pour effet de faire passer l'angle de propagation $\theta_z(0)$ d'un certain nombre de modes d'une valeur inférieure à l'angle critique de propagation $\theta_c$ à une valeur $\theta_z(z_m)$ supérieure à cet angle. Ces modes qui sont guidés par la fibre optique 2 aussi longtemps que leur angle de propagation $\theta_z(0)$ reste inférieur à l'angle critique $\theta_c$, sont rayonnés par ladite fibre 2 au niveau du rétrécissement local 4 dès que leur angle de propagation $\theta_z(z_m)$ devient supérieur à l'angle critique $\theta_c$. Localement, on obtient ainsi un filtre modal dont la fonction de transfert Tf $(\theta)$ est représentée à la figure 3. Toute perturbation précédant le rétrécissement induit des couplages faisant varier l'intensité résultante en sortie de fibre.

On rappelle que l'angle critique de propagation d'un mode dans une fibre optique est défini par la relation $\theta_c$ = Arcsin($n_c/n_{cl}$), où $n_c$ et $n_{cl}$ sont respectivement les indices de coeur et de gaine de la fibre.

On remarquera qu'en adoptant par exemple un profil de rétrécissement d'angle constant $\Omega$, les modes à partir d'un certain ordre voient leur angle de propagation $\theta$ devenir supérieur à l'angle critique $\theta_c$ de guidage dans la fibre. Localement, on obtient ainsi un filtre modal. Toute perturbation précédant le rétrécissement local 4 de la fibre 2 induit des couplages entre modes faisant varier l'intensité globale des modes si celle-ci était mesurée à l'endroit le plus étroit.

En liaison avec la relation (2) mentionnée ci-avant qui fixe les conditions de couplage entre groupes de modes particuliers, il est possible de déformer la première partie de fibre 6 selon une déformation périodique de grande période (2 à 3 cm) et de faible amplitude, de telle sorte que la partie de fibre optique ainsi déformée induise des couplages préférentiels entre les modes préservés (c'est-à-dire les modes guidés) et les modes éliminés (c'est-à-dire les modes rayonnés) par le rétrécissement local 4. Cette conformation de la partie sensible de fibre optique 6 a pour effet d'augmenter notablement la sensibilité du dispositif selon l'invention.

Le rétrécissement 4 définit également les conditions d'injection dans la seconde partie 8 de la fibre optique. A l'extrémité de cette seconde partie 8, la mesure globale de l'intensité des modes est sensible aux couplages induits le long de la première partie 6 de fibre.

On peut montrer que les modes non affectés par le filtre ont un angle de propagation à l'interface coeur-gaine dans la partie rétrécie qui vérifie la condition :

$$0 \leq \sin \theta_z(0) \leq \frac{\rho_{\min}}{\rho(0)} \sin \theta_c = \sin \theta_{\max}$$

La puissance optique $P_{ray}$ rayonnée au niveau du rétrécissement local 4 est fonction de la puissance optique incidente $P_{inc}$ et est donnée par la relation :

$$P_{ray} = P_{inc}\left(1 - \frac{\rho_{\min}^2}{\rho^2(0)}\right)$$

Quant à la puissance transmise $P_{transm}$ au niveau du rétrécissement local 4, elle est donnée par la relation :

$$P_{transm} = P_{inc}\left(\frac{\rho_{\min}^2}{\rho^2(0)}\right)$$

On s'intéresse maintenant aux effets d'une courbure périodique de la fibre optique sur les couplages entre modes.

En déformant la fibre optique selon une succession de courbures périodiques de période $\Lambda$ et de faibles amplitudes, on peut favoriser les couplages entre des groupes de modes particuliers, rendant ainsi la fibre plus sensible à de faibles perturbations telles que la pression, la flexion ou les impacts. On rappelle que l'on peut induire des couplages stationnaires entre modes guidés particuliers si la période de courbure $\Lambda$ vérifie la condition :

$$\frac{1}{\rho^2 k n_c} \leq \frac{2\pi}{\Lambda} \leq \frac{1}{\rho^2 k n_c} + \frac{2\sqrt{\Delta}}{\rho}$$

où k est la constante de propagation et $\Delta$ est la différence relative des indices de réfraction du coeur $n_c$ et de la gaine optique $n_{cl}$.

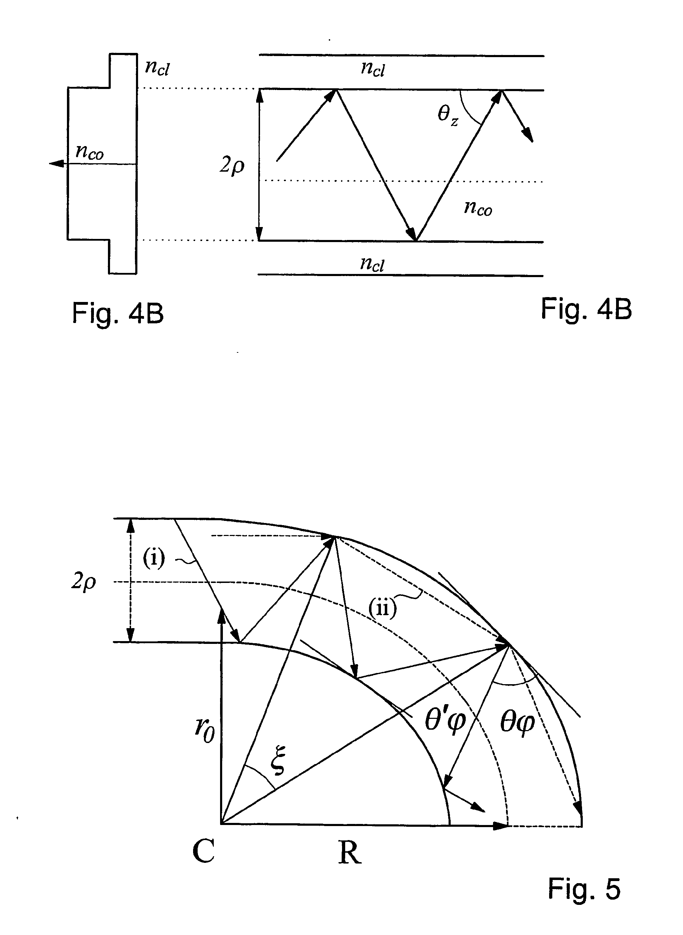

La figure 4A illustre le profil d'indice d'une fibre optique à saut d'indice dont l'indice de coeur est $n_c$ et dont l'indice de gaine est $n_{cl}$, $\rho$ étant le rayon de coeur de ladite fibre. La figure 4B est une vue en coupe longitudinale d'une telle fibre optique à saut d'indice sur laquelle est représentée la trajectoire d'un mode optique qui se réfléchit selon un angle $\theta_z$ à l'interface entre le coeur et la gaine de ladite fibre.

La figure 5 est une vue en coupe d'une portion de fibre optique courbée selon un plan passant par l'axe de symétrie longitudinale de ladite fibre et contenant le rayon de courbure R et le centre de courbure C.

A l'entrée de la portion courbée de fibre optique, les angles de propagation $\theta_z$ des modes subissent une modification qui, selon la valeur du rayon de courbure R de ladite fibre, conduit à deux types de propagation distincts.

Un premier type de propagation s'effectue par réflexions successives d'un mode optique sur les interfaces coeur-gaine interne 12' et externe 12". Il s'agit des rayons (i) dont les angles de réflexion $\theta_\varphi$ sur l'interface coeur-gaine interne 12' et $\theta'_\varphi$ sur l'interface coeur-gaine externe 12" sont donnés par les relations :

$$\cos\theta_\varphi = \frac{r_0}{R+\rho}\cos\theta_z$$

$$\cos\theta'_\varphi = \frac{r_0}{R-\rho}\cos\theta_z$$

où $R-\rho < r_0 < R+\rho$ est la distance qui sépare le centre de courbure C de la fibre du point d'entrée du rayon lumineux dans la partie courbée de ladite fibre.

On notera que l'angle $\theta_\varphi$ est l'angle que forme le faisceau lumineux avec la tangente à l'interface coeur-gaine interne 12' au point où ce faisceau lumineux se réfléchit sur ladite interface. De même, l'angle $\theta'_\varphi$ correspond à l'angle entre le faisceau lumineux et la tangente à l'interface coeur-gaine extérieure 12" au point où ledit faisceau se réfléchit sur ladite interface.

On notera également que la séparation angulaire $\xi$ qui indique la périodicité de la propagation du signal optique dans la partie courbée de la fibre optique est donnée par la relation $\xi = 2(\theta_\varphi - \theta'_\varphi)$ et est la même que le signal optique se réfléchisse sur l'interface interne 12' ou sur l'interface externe 12".

Une propagation par réflexions successives sur l'interface coeur-gaine externe 12" uniquement est également possible. Il s'agit des rayons (ii) qui n'existent que si la relation suivante est satisfaite:

$$\cos\theta_\varphi > \frac{R-\rho}{R+\rho}$$

Dans ce cas, la séparation angulaire est : $\xi = 2\theta_\varphi$

Dans les deux cas, comme $R-\rho < r_0 < R+\rho$, on en conclut que $\theta_\varphi > \theta_z$ et qu'il y a donc bien couplage des modes d'ordre inférieur $\theta_z$ vers les modes d'ordre supérieur $\theta_\varphi$.

On s'intéresse maintenant aux atténuations du signal optique provoquées par la courbure R de la fibre.

Le profil d'indice d'une fibre optique à saut d'indice est défini par :

$$n(x) = \begin{cases} n_c & |x| < \rho \\ n_{cl} & |x| \geq \rho \end{cases}$$

où $n_c$, $n_{cl}$ et $\rho$ sont respectivement l'indice du coeur, l'indice de la gaine et le rayon du coeur de la fibre.

L'angle critique complémentaire $\theta_c$ est défini par :

$$\theta_c = \cos^{-1}(n_{cl}/n_c)$$

Si la source optique utilisée est de type lambertienne, la puissance optique injectée P(θ) est donnée par la relation :

$$P(\theta) = P_0 \cos\theta_z$$

où $P_0$ est une constante et $-\theta_c \leq \theta_z \leq \theta_c$

La demi-période de propagation dans la fibre optique rectiligne est définie par :

$$z_p = \frac{2\rho}{\tan\theta_z}$$

où $\theta_z$ est l'angle formé par la tangente à la trajectoire du rayon optique et l'axe guide.

Le nombre des réflexions par unité de longueur N est défini comme l'inverse de $z_p$.

Les pertes par radiation sont des phénomènes ondulatoires qui ne peuvent pas être quantifiés par l'optique géométrique. Pour évaluer la fraction de puissance transmise dans la gaine à chaque réflexion au niveau des interfaces coeur-gaine pour les fibres à saut d'indice et à chaque point tournant pour les guides à gradient d'indice, les rayons optiques sont traités localement comme des ondes électromagnétiques planes. La puissance transmise dans la gaine représente la fraction de puissance perdue. Ces pertes sont décrites par un coefficient de transmission T donné par :

$$T = 1 - \frac{puissance\ r\acute{e}flechie}{puissance\ incidente}$$

La puissance de sortie d'un angle donné ξ le long de la courbure est donnée par :

$$p(\xi) = p(0)\exp(-\gamma\xi)$$

où p(0) est la puissance à l'entrée de la courbure et γ est le coefficient d'atténuation de puissance donné par :

$$\gamma = \frac{\sum_{i=1}^{N} T_i}{\sum_{i=1}^{N} \xi_i}$$

L'expression des pertes par effet tunnel ($\theta\varphi < \theta_c$) est donnée par :

$$T = 4\left(1 - \frac{\sin^2 \theta_\varphi}{\sin^2 \theta_c}\right)^{1/2} \exp\left\{-\frac{2}{3}n_c k(R+\rho)\left(\sin^2 \theta_c - \sin^2 \theta_\varphi\right)^{3/2}\right\}$$

L'expression des pertes par réfraction ($\theta\varphi > \theta_c$) est donnée par :

$$T = 4\frac{\sin \theta_\varphi}{\sin \theta_c}\left(\frac{\sin^2 \theta_\varphi}{\sin^2 \theta_c} - 1\right)^{1/2}$$

où $k = 2\pi/\lambda$ est la constante de propagation.

Si $\theta z \cong \theta_c$, le coefficient de transmission T est donné par la fonction de d'Airy complète. La puissance totale de sortie le long d'une courbure est obtenue en faisant une double sommation sur toutes les positions et dans toutes les directions :

$$P_s = P(0)\int_{R-\rho}^{R+\rho} dr \int_{-\theta_c(r)}^{\theta_c(r)} \cos \theta . \exp(-\gamma\varphi)d\theta_z$$

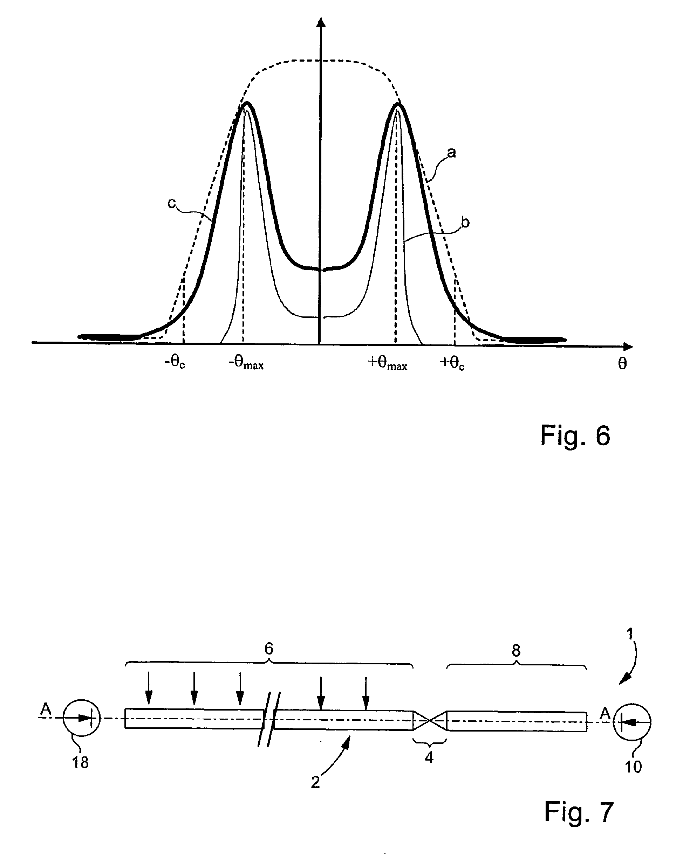

Les relations précédentes permettent de calculer les pertes dans un guide optique plan. Le calcul des pertes dans les guides optiques cylindriques (cas des fibres optiques) est plus complexe mais on peut montrer que leurs variations sont analogues à celles du guide plan. En effet, on peut montrer que les pertes sont maximales dans le plan de courbure défini par le rayon R et l'axe longitudinal de la fibre et chutent rapidement lorsque l'on s'éloigne de ce plan. La distribution de l'énergie à la sortie d'une fibre optique périodiquement courbée est représentée à la figure 6. Sur cette figure ont été représentés :

- le profil de distribution en champ lointain d'une fibre rectiligne en trait pointillé (courbe a);
- le profil de distribution d'une fibre courbée périodiquement en trait plein (courbe b), et
- l'effet additionnel du filtre de modes en trait gras (courbe c).

En faisant coïncider l'angle $\theta_{max}$ défini par le filtre de mode avec l'accroissement d'angle $\Delta\theta_\varphi$ produit par la courbure, on obtient une distribution de mode assurant une sensibilité optimale pour des perturbations de type impact, pression ou flexion :

$$\frac{\rho(0)}{\rho_{min}}\sin\theta_c = \theta_{max} = a\cos\frac{r_0}{R+\rho}$$

avec $R-\rho < r_0 < R+\rho$.

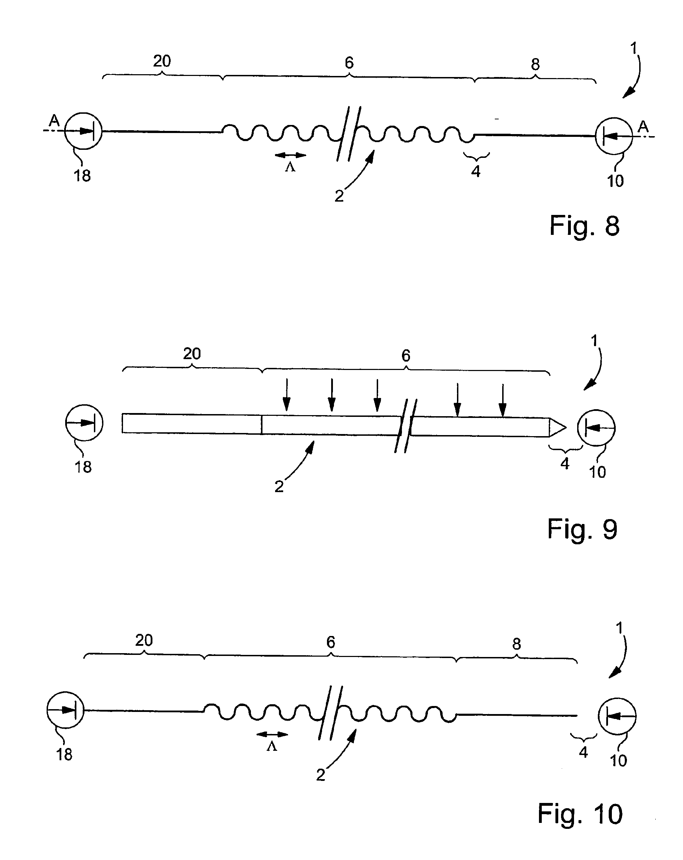

En tenant compte des considérations qui précèdent, deux modes de réalisation du capteur de chocs à fibre optique selon l'invention sont proposés en liaison avec les figures 7 et 8 annexées à la présente demande de brevet.

La figure 7 illustre un mode d'exécution simplifié du capteur de chocs 1 selon l'invention. Comme on le voit à la figure 7, le capteur 1 comporte une source optique 18 de préférence non cohérente telle qu'une diode électroluminescente ou "led" ayant un angle d'émission suffisamment grand pour pouvoir exciter l'ensemble des modes susceptibles de se propager dans la fibre optique multimode 2. Cette fibre optique sera préférentiellement une fibre plastique à grand rayon de coeur mais il est également possible d'utiliser une fibre en silice. La première partie 6 de la fibre optique 2 sensible aux couplages entre modes est fixée face à la source optique 18 à une distance telle que la section supposée circulaire du faisceau lumineux soit légèrement supérieure au diamètre de la fibre optique 2. Cette disposition a pour effet d'exciter un maximum de modes à l'entrée de la fibre optique 2. Cette partie sensible 6 de la fibre optique 2 suit essentiellement un tracé matérialisé par la ligne A-A sur la figure 3 et qui peut correspondre, par exemple, à l'encadrement d'une fenêtre de portière de véhicule automobile. La seconde partie 8 de la fibre optique 2 qui sert à la transmission de l'information est reliée au photodétecteur 10. La première partie 6 de la fibre optique 2 est sensible aux perturbations car on effectue un filtrage modal par le biais du rétrécissement local 4 de la fibre, tandis que la seconde partie 8 de la fibre est insensible aux perturbations dans la mesure où elle propage tous les modes.

Un second mode de réalisation du capteur de chocs 1 selon l'invention est illustré à la figure 8. Dans la mesure ou le rétrécissement 4 n'est pas trop accentué, cela permet de pouvoir disposer d'un niveau de signal optique suffisant en sortie de la fibre 2. Cela a également pour effet de réduire la sensibilité de la fibre optique 2 aux perturbations extérieures. Cet agencement permet d'ajouter au capteur 1 une longueur de fibre 20 suffisante pour amener le signal optique depuis la source optique 12 jusqu'à la zone 6 où l'on souhaite détecter les perturbations. Préférentiellement, cette partie de fibre optique est recouverte d'une gaine de protection rigide.

A partir de ce point, la partie sensible 6 de fibre optique est courbée sur toute sa longueur par apport au tracé A-A selon une déformation périodique de faible amplitude (1 à 3 mm pour une fibre optique plastique de 1 mm de diamètre de coeur) et de période telle qu'elle vérifie la condition de couplage (2), jusqu'à l'endroit où est pratiqué le rétrécissement 4. Les paramètres de la déformation périodique appliquée à cette seconde portion de fibre 6 sont ajustés afin de favoriser le couplage entre les modes dont les ordres sont situés à la limite de la condition de guidage imposée par la fibre optique et le profil de rétrécissement. La portion de fibre 6 ainsi conformée est rendue notablement plus sensible que la partie 20 qui la précède, ce qui permet d'ajuster le seuil de déclenchement du capteur 1 soumis à un choc et de conserver un niveau d'insensibilité suffisant pour la première portion de fibre 20. Cette seconde partie de fibre 6 sera de préférence recouverte d'une gaine de protection déformable. Cette gaine de protection peut présenter un conduit central auquel il est possible d'impartir la forme voulue, par exemple une forme sinusoïdale ou en spirale correspondant aux paramètres de déformation périodique recherchés dans lequel sera introduite la partie sensible 6 de fibre optique.

La configuration est ensuite identique au capteur précédent avec une troisième longueur de fibre 8 peu sensible aux perturbations environnantes et suffisamment longue pour amener le signal optique jusqu'au photodétecteur 10 et son électronique de traitement. Cette troisième partie de fibre optique est recouverte d'une gaine de protection rigide.

Selon une première variante de réalisation du capteur selon l'invention illustrée à la figure 9, le photodétecteur 10 est placé immédiatement après la zone de rétrécissement local 4 de la fibre optique 2.

Selon une seconde variante de réalisation du capteur selon l'invention illustrée à la figure 10, le rétrécissement local 4 est pratiqué, non pas entre la partie sensible 6 de fibre optique et la partie 8 de fibre optique qui sert à la transmission de l'information jusqu'à un photodétecteur 10, mais à l'extrémité de ladite partie 8 de fibre optique.

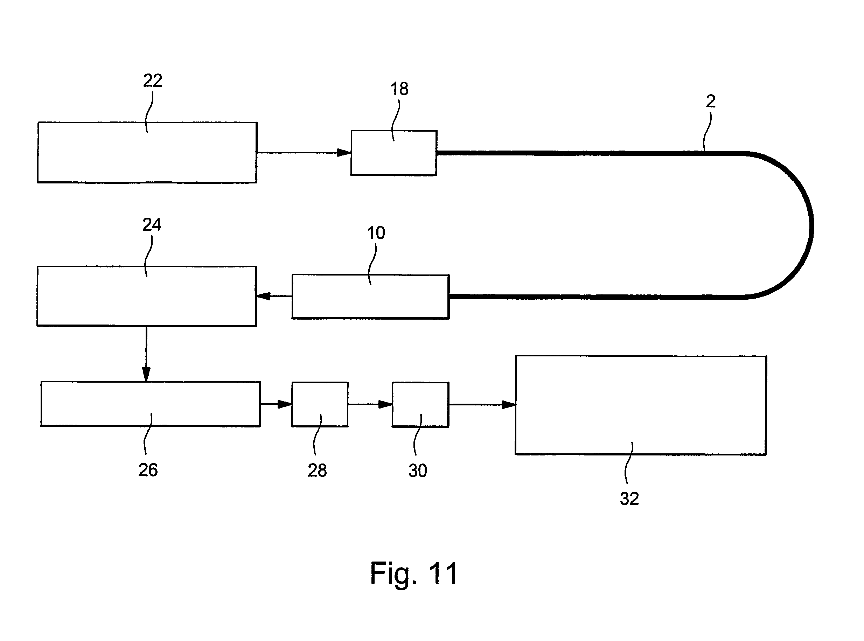

On s'intéresse maintenant aux particularités du signal fourni par le capteur selon l'invention et de la détection électronique en liaison avec la figure 11. A cet effet, la source lumineuse 18 est reliée à un circuit de polarisation en courant 22. La source optique 18 est reliée au photodétecteur 10 par une portion de fibre optique localement rétrécie et éventuellement courbée périodiquement conformément aux enseignements de la présente invention. Le capteur a pour but de fournir une information consécutive à un choc ou à un impact sur sa partie sensible. Le photodétecteur convertit la lumière incidente en courant électrique qui est d'abord amplifié par un amplificateur à

transimpédance 24. La composante continue du signal est filtrée au moyen d'un filtre passe-haut 26 tel que, par exemple, un condensateur placé en série entre la sortie de l'étage amplificateur et l'étage suivant. Il ne subsiste plus que la composante rapidement variable qui est amplifiée pour exciter un étage comparateur 28 chargé de générer une impulsion au-delà d'un seuil de déclenchement qui est ajustable. Cette impulsion est maintenue durant le temps nécessaire au moyen d'un circuit "holder" 30 pour que le circuit générateur d'alarme 32 puisse effectuer les opérations nécessaires pour stopper le mouvement du panneau mobile puis inverser son sens de déplacement. Après cette période de temps, l'impulsion se remet au niveau zéro et le système est de nouveau prêt à opérer.

Comme on peut le constater, la carte électronique requise est très simple et présente de nombreux avantages :

- un nombre réduit de composants simples. Le circuit ne requiert pas de composants élaborés et coûteux tels que des convertisseurs analogiques/digitaux, des microprocesseurs ou microcontrôleurs;
- un temps de réponse très rapide;
- un seuil de détection ajustable en fonction de la seule partie sensible du capteur;
- les signaux continus n'étant pas pris en compte, la dérive d'offset des composants n'est pas gênante;
- les fluctuations d'intensité de la source optique ainsi que les paramètres du photodétecteur, suite aux variations thermiques et à l'usure du temps, ne sont également pas gênantes;
- la fibre de diamètre de coeur et d'ouverture numérique importants permet d'utiliser des diodes électroluminescentes ou "led" de faible puissance et peu coûteuses;

- dimensions de la carte électronique réduites et prix de revient très avantageux.

Quant au dispositif selon l'invention, il présente lui aussi de nombreux avantages :

- très sensible, sa sensibilité peut en outre être ajustée entre quelques millinewtons et plusieurs centaines de newtons;
- son temps de réponse est très rapide;
- son encombrement est faible. En effet, il se présente comme un câble flexible de diamètre 3 à 5 mm dont la section est réduite;
- encombrement également très réduit pour la partie électronique;
- consommation électrique très faible;
- insensibilité aux perturbations électromagnétiques car le capteur est de type optique;
- possibilité d'utiliser une fibre optique plastique du même type que celles intégrées actuellement dans les véhicules automobiles : source optique, photodétecteur et fibre optique présentent des coûts très réduits car, en raison du diamètre élevé de la fibre, le rendement à l'injection est satisfaisant;
- les opérations de raccordement d'une fibre optique plastique sont beaucoup plus faciles et moins coûteuses en comparaison avec les fibres classiques en silice. Le découpage de la fibre peut être réalisé au moyen d'une simple lame chauffée. Les extrémités de la fibre n'ont pas besoin d'être polies et les contraintes d'alignement sont réduites (il est en effet aisé d'aligner une fibre optique de grand diamètre avec une source optique). Enfin, le temps de montage d'un connecteur est très court;
- l'opération de rétrécissement local de la fibre est rendu très aisée par le fait qu'elle soit en plastique (chauffage local à basse température (de 70 à 80°C) puis étirage);
- la fibre optique n'est que faiblement courbée, ce qui lui confère une longue durée de vie;
- du fait de sa symétrie cylindrique, le capteur ne nécessite pas un positionnement ou une orientation particulière;
- facilité d'installation, notamment le long du joint en caoutchouc qui longe le cadre des portières automobiles;
- le capteur s'applique indifféremment à des panneaux mobiles entraînés par des moteurs électriques ou par des moyens hydrauliques ou pneumatiques car il s'agit d'un capteur de type direct qui ne nécessite aucune information en provenance du moteur pour opérer.
- coûts de production et coûts des composants très compétitifs vis à vis des dispositifs de l'art antérieur connus;
- processus de production pouvant être aisément automatisé, permettant ainsi des productions à grande échelle.

**Revendications**

1.  Capteur de chocs à fibre optique multimode (2) présentant une partie sensible (6) s'étendant le long d'un tracé (A-A) et fonctionnant selon le principe du couplage entre les modes guidés par la fibre optique, ce capteur (1) comprenant une source optique (18) disposée à une première extrémité de la fibre (2) pour injecter un signal lumineux dans cette dernière, et un circuit de détection optique et de traitement (10) pour recevoir et analyser le signal lumineux émis par la source optique (18) et traversant la fibre optique (2), ce circuit (10) étant disposé à une seconde extrémité de la fibre (2), ce capteur (1) étant **caractérisé en ce que** la fibre optique (2) présente en un endroit de sa longueur une zone de rétrécissement local (4) de son diamètre qui vient de matière avec ladite fibre optique (2) et qui est suffisante pour extraire une partie des modes guidés dans ladite fibre (2), la partie sensible (6) de fibre optique (2) s'étendant depuis la source optique (18) jusqu'à cette zone de rétrécissement local (4), et **en ce que** ledit circuit de détection optique et de traitement (10) comprend des moyens de filtrage de la composante continue du signal optique.

2.  Capteur de chocs selon la revendication 1, **caractérisé en ce que** la partie sensible (6) de la fibre optique (2) suit essentiellement le tracé (A-A).

3.  Capteur de chocs selon la revendication 2, **caractérisé en ce que** le circuit de détection optique et de traitement (10) est disposé immédiatement après la zone de rétrécissement local (4) du diamètre de la fibre optique (2).

4.  Capteur de chocs selon la revendication 2, **caractérisé en ce que** la zone de rétrécissement local (4) du diamètre de la fibre optique (2) est suivie d'une partie (8) de fibre optique (2) insensible aux perturbations et qui sert à la transmission du signal lumineux jusqu'au circuit de détection optique et de traitement (10).

5.  Capteur de chocs selon la revendication 1, **caractérisé en ce que** la partie sensible (6) de fibre optique (2) est courbée périodiquement par rapport au tracé (A-A) pour favoriser les couplages entre les modes guidés par la partie sensible de la fibre (2).

**6.** Capteur de chocs selon la revendication 5, **caractérisé en ce que** la zone de rétrécissement local (4) du diamètre de la fibre optique (2) est prévue immédiatement après la partie sensible (6) de fibre optique (2).

**7.** Capteur de chocs selon la revendication 6, **caractérisé en ce que** le circuit de détection optique et de traitement (10) est disposé immédiatement après la zone de rétrécissement local (4) du diamètre de la fibre optique (2).

**8.** Capteur de chocs selon la revendication 5, **caractérisé en ce que** la partie sensible (6) de fibre optique (2) est suivie d'une partie (8) de fibre optique (2) insensible aux perturbations et qui sert à la transmission de l'information jusqu'au circuit de détection optique et de traitement (10), la zone de rétrécissement local (4) du diamètre de la fibre (2) étant prévue à l'extrémité de cette partie (8) de fibre optique (2).

**9.** Capteur de chocs selon l'une quelconque des revendications 1 à 8, **caractérisé en ce que** la partie sensible (6) de fibre optique (2) est précédée d'une portion (20) de fibre optique (2) pour amener le signal optique depuis la source optique (18) jusqu'à la partie sensible (6) de fibre optique (2).

**10.** Capteur de chocs selon l'une quelconque des revendications 1 à 9, **caractérisé en ce que** la source optique (18) est une source faiblement cohérente.

**11.** Capteur de chocs selon l'une quelconque des revendications 1 à 10, **caractérisé en ce que** la fibre optique (2) est une fibre en plastique.

**12.** Capteur de chocs selon l'une quelconque des revendications 5 à 11, **caractérisé en ce que** la partie sensible (6) de fibre optique est courbée par rapport au tracé (A-A) selon une déformation périodique dont l'amplitude est comprise entre 1 mm et 3 mm et dont la période est de 2 cm à 3 cm pour une fibre optique de 1 mm de diamètre de coeur.

**13.** Dispositif de commande du déplacement d'un panneau mobile destiné à obturer une ouverture, **caractérisé en ce qu'**il comprend un capteur de chocs selon l'une quelconque des revendications 1 à 12.

**14.** Dispositif de commande selon la revendication 13, **caractérisé en ce qu'**il comprend un circuit de polarisation en courant (22) relié à une source optique (18), cette source optique (18) étant elle-même reliée à un photodétecteur (10) par une portion de fibre optique localement rétrécie et éventuellement courbée périodiquement, le photodétecteur (10) convertissant la lumière incidente en courant électrique qui est d'abord amplifié par un amplificateur à transimpédance (24) puis filtré au moyen d'un filtre passe-haut (26), de sorte qu'il ne subsiste plus qu'une composante variable qui est amplifiée pour exciter un étage comparateur (28) chargé de générer une impulsion au-delà d'un seuil de déclenchement qui est ajustable, cette impulsion étant maintenue durant le temps nécessaire au moyen d'un circuit holder (30) pour qu'un circuit générateur d'alarme (32) puisse effectuer les opérations nécessaires pour stopper le mouvement du panneau mobile puis inverser son sens de déplacement.

**Claims**

**1.** Multimode optical fibre shock sensor (2) having a sensitive portion (6) extending along a line (A-A) and operating in accordance with the principle of coupling between the modes guided by the optical fibre, said sensor (1) including an optical source (18) arranged at a first end of the fibre (2) for injecting a luminous signal into said fibre, and an optical detection and processing circuit (10) for receiving and analyzing the luminous signal emitted by the optical source (18) and passing through the optical fibre (2), said circuit (10) being arranged at a second end of the fibre (2), said sensor (1) being **characterized in that**, at one point on the length thereof, the optical fibre (2) has an area of local diameter constriction (4) which is integral with said optical fibre (2) and which is sufficient to extract part of the guided modes in said fibre (2), the sensitive portion (6) of the optical fibre (2) extending from the optical source (18) up to said area of local constriction (4), and **in that** said optical detection and processing circuit (10) includes means for filtering the continuous component of the optical signal.

**2.** shock sensor according to claim 1, **characterized in that** the sensitive portion (6) of the optical fibre (2) essentially follows the line (A-A).

3. Shock sensor according to claim 2, **characterized in that** the optical detection and processing circuit (10) is arranged immediately after the area or local diameter constriction (4) in the optical fibre (2).

4. Shock sensor according to claim 2, **characterized in that** the area of local diameter constriction (4) in the optical fibre (2) is followed by a portion (8) of optical fibre (2) that is insensitive to interference and which is used for the transmission of the luminous signal to the optical detection and processing circuit (10).

5. Shock sensor according to claim 1, **characterized in that** the sensitive portion (6) of the optical fibre (2) is periodically bent relative to the line (A-A) to facilitate the coupling between the modes guided by the sensitive portion of the fibre (2).

6. Shock sensor according to claim 5, **characterized in that** the area of local diameter constriction (4) in the optical fibre (2) is provided immediately after the sensitive portion (6) of the optical fibre (2).

7. Shock sensor according to claim 6, **characterized in that** the optical detection and processing circuit (10) is arranged immediately after the area of local diameter constriction (4) in the optical fibre (2).

8. Shock sensor according to claim 5, **characterized in that** the sensitive portion (6) of the optical fibre (2) is followed by a portion (8) of optical fibre (2) that is insensitive to interference and which is used for the transmission of data to the optical detection and processing circuit (10), the area of local diameter constriction (4) in the optical fibre (2) being provided at the end of said portion (8) of optical fibre (2).

9. Shock sensor according to any of claims 1 to 8, **characterized in that** the sensitive portion (6) of the optical fibre (2) is preceded by a portion (20) of optical fibre (2) for conveying the optical signal from the optical source (18) to the sensitive portion (6) of optical fibre (2).

10. Shock sensor according to any of claims 1 to 9, **characterized in that** the optical source (18) a weakly coherent source.

11. Shock sensor according to any of claims 1 to 10, **characterized in that** the optical fibre (2) is a plastic fibre.

12. Shock sensor according to any of claims 5 to 11, **characterized in that** the sensitive portion (6) of the optical fibre is bent relative to the line (A-A) in a periodic deformation with an amplitude comprised between 1 mm and 3 mm and a period of between 2 cm and 3 cm for an optical fibre with a core diameter of 1 mm.

13. Control device for moving a moveable panel intended to close an aperture, **characterized in that** it includes a shock sensor according to any of claims 1 to 12.

14. Control device according to claim 13, **characterized in that** it includes a current polarizing circuit (22) connected to an optical source (18), wherein said optical source (18) is in turn connected to a photo-detector (10) by a locally constricted portion of optical fibre which may be periodically bent, and the photo-detector (10) converts the incident light into electrical current, which is first of all amplified by a transimpedance amplifier (24), then filtered by means of a high pass filter (26), such that only one variable component remains which is amplified to excite a comparator stage (28) responsible for generating an impulse beyond an adjustable trigger threshold, and wherein said impulse is maintained for the necessary time by means of a holder circuit (30) so that an alarm generator circuit (32) can perform the operations necessary to stop the movement of the moveable panel and then reverse the direction of movement thereof.

**Patentansprüche**

1. Stoßsensor mit Mehrmoden-Lichtleitfaser (2), der einen empfindlichen Teil (6) aufweist, der sich längs einer Bahn (A-A) erstreckt und gemäß dem Prinzip der Koppelung zwischen Moden, die durch die Lichtleitfaser gerührt werden, arbeitet, wobei dieser Sensor (1) eine Lichtquelle (18), die an einem ersten Ende der Faser (2) angeordnet ist, um in dieses ein Lichtsignal einzuleiten, und eine Lichtdetektions und Verarbeitungsschaltung (10), um das von der Lichtquelle (18) ausgesendete und durch die Lichtleitfaser (2) laufende Lichtsignal zu empfangen und zu analysieren, umfasst, wobei diese Schaltung (10) an einem zweiten Ende der Faser (2) angeordnet ist, wobei dieser Sensor (1) **dadurch gekennzeichnet ist, dass** die Lichtleitfaser (2) an einer Stelle auf ihrer Länge eine Zone (4) mit lokal verengtem Durchmesser aufweist, die mit der Lichtleitfaser (2) einteilig ausgebildet ist und ausreicht, um einen Teil der in der Faser (2) geführten Moden zu extrahieren, wobei sich der empfindliche Teil (6) der Lichtleitfaser (2) von der Lichtquelle (18) bis zu dieser lokal verengten Zone (4) erstreckt, und dass die Lichtdetektions- und Verarbeitungsschaltung (10) Mittel zum Filtern der Gleichstromkomponente des Lichtsignals umfasst.

2. Stoßsensor nach Anspruch 1, **dadurch gekennzeichnet, dass** der empfindliche Teil (6) der Lichtleitfaser (2) im Wesentlichen der Bahn (A-A) folgt.

3. Stoßsensor nach Anspruch 2, dadurch gekennzeichet, dass die Lichtdetektions- und Verarbeitungsschaltung (10) direkt hinter der Zone (4) mit lokal verengtem Durchmesser der Lichtleitfaser (2) angeordnet ist.

4. Stoßsensor nach Anspruch 2, **dadurch gekennzeichnet, dass** der Zone (4) mit lokal verengtem Durchmesser der Lichtleitfaser (2) ein Teil (8) der Lichtleitfaser (2) folgt, der für Störungen unempfindlich ist und der der Übertragung des Lichtsignals bis zu der Lichtdetektions- und Verarbeitungsschalfung (10) dient.

5. Stoßsensor nach Anspruch 1, **dadurch gekennzeichnet, dass** der empfindliche Teil (6) der Lichtleitfaser (2) in Bezug auf die Bahn (A-A) periodisch gekrümmt ist, um die Kopplungen zwischen den geführten Moden durch den empfindlichen Teil der Faser (2) zu fördern.

6. Stoßsensor nach Anspruch 5, **dadurch gekennzeichnet, dass** die Zone (4) mit lokal verengtem Durchmesser der Lichtleitfaser (2) direkt hinter dem empfindlichen Teil (6) der Lichtleitfaser (2) vorgesehen ist.

7. Stoßsensor nach Anspruch 6, **dadurch gekennzeichnet, dass** die Lichtdetektions- und Verarbeitungsschaltung (10) direkt hinter der Zone (4) mit lokal verengtem Durchmesser der Lichtleitfaser (2) angeordnet ist.

8. Stoßsensor nach Anspruch 5, **dadurch gekennzeichnet, dass** dem empfindlichen Teil (6) der Lichtleitfaser (2) ein Teil (8) der Lichtleitfaser (2) folgt, der für Störungen unempfindlich ist und der der Übertragung von Informationen bis zu der Lichtdetektions- und Verarbeitungsschaltung (10) dient, wobei die Zone (4) mit lokal verengtem Durchmesser der Faser (2) am Ende dieses Teils (8) der Lichtleitfaser (2) vorgesehen ist.

9. Stoßsensor nach einem der Ansprüche 1 bis 8, **dadurch gekennzeichnet, dass** dem empfindlichen Teil (6) der Lichtleitfaser (2) ein Abschnitt (20) der Lichtleitfaser (2) vorhergeht, um das optische Signal von der Lichtquelle (18) zu dem empfindlichen Teil (6) der Lichtleitfaser (2) zu transportieren.

10. Stoßsensor nach einem der Ansprüche 1 bis 9, **dadurch gekennzeichnet, dass** die Lichtquelle (18) eine schwach kohärente Quelle ist.

11. Stoßsensor nach einem der Ansprüche 1 bis 10, **dadurch gekennzeichnet, dass** die Lichtleitfaser (2) eine Kunststofffaser ist.

12. Stoßsensor nach einem der Ansprüche 5 bis 11, **dadurch gekennzeichnet**, das der empfindliche Teil (6) der Lichtleitfaser in Bezug auf die Bahn (A-A) gemäß einer periodischen Verformung gekrümmt ist, wobei für eine Lichtleitfaser mit einem Kerndurchmesser von 1 mm deren Amplitude im Bereich von 1 mm bis 3 mm liegt und deren Periode im Bereich von 2 cm bis 3 cm liegt.

13. Steuervorrichtung für die Verlagerung einer beweglichen Platte, die eine Öffnung verschließen soll, **dadurch gekennzeichnet, dass** sie einen Stoßsensor nach einem der Ansprüche 1 bis 12 enthält.

14. Steuervorrichtung nach Anspruch 13, **dadurch gekennzeichnet, dass** sie eine Vorstromschaltung (22) umfasst, die mit einer Lichtquelle (18) verbunden ist, wobei diese Lichtquelle (18) ihrerseits über einen Abschnitt der Lichtleitfaser, der lokal verengt und eventuell periodisch gekrümmt ist, mit einem Photodetektor (10) verbunden ist, wobei der Photodetektor (10) das auftreffende Licht in elektrischen Strom umwandelt, der zunächst durch einen Transimpedanz-Verstärker (24) verstärkt und dann mittels eines Hochpassfilters (26) gefiltert wird, derart, dass er nur noch aus einer variablen Komponente besteht, die verstärkt wird, um eine Komparatorstufe (28) zu erregen, die geladen ist, um einen Impuls oberhalb eines Ausiöseschwellenwerts, der einstellbar ist, zu erzeugen, wobei dieser Impuls während der erforderlichen Zeit mittels einer Halteschaltung (30) gehalten wird, damit eine Alarmgeneratorschaltung (32) die erforderlichen Operationen ausrühren kann, um die Bewegung der beweglichen Platte anzuhalten und dann ihre Verlagerungsrichtung umzukehren.

Fig. 1

Fig. 2

Fig. 3

Fig. 4B

Fig. 4B

Fig. 5

Fig. 6

Fig. 7

Fig. 8

Fig. 9

Fig. 10

Fig. 11

**EP 1 856 486 B1**

## RÉFÉRENCES CITÉES DANS LA DESCRIPTION

**Documents brevets cités dans la description**

- FR 2615284

- US 6144790 A